**Europäisches Patentamt**

**European Patent Office**

**Office européen des brevets**

(11) Veröffentlichungsnummer: **0 498 350 A2**

# EUROPÄISCHE PATENTANMELDUNG

(21) Anmeldenummer: **92101751.3**

(22) Anmeldetag: **03.02.92**

(51) Int. Cl.⁵: **H03K 5/02**, H03K 17/74, H03K 17/10

(30) Priorität: **07.02.91 DE 4103673**
**07.02.91 DE 4103674**
**07.02.91 DE 4103675**
**04.04.91 DE 4110878**
**10.05.91 DE 4115294**

(43) Veröffentlichungstag der Anmeldung:
**12.08.92 Patentblatt 92/33**

(84) Benannte Vertragsstaaten:
**DE FR GB IT**

(71) Anmelder: **TELEFUNKEN electronic GmbH**

**Theresienstrasse 2**
**W-7100 Heilbronn(DE)**

(72) Erfinder: **Rauter, Wilhelm**
**Hans Holbein Weg 17**
**W-7100 Heilbronn(DE)**

(74) Vertreter: **Maute, Hans-Jürgen, Dipl.-Ing.**
**TELEFUNKEN electronic GmbH**
**Theresienstrasse 2**
**W-7100 Heilbronn(DE)**

(54) **Schaltung zur Spannungsüberhöhung.**

(57) Beschrieben wird eine Schaltung zur Spannungsüberhöhung eines an zwei Schaltungseingängen anstehenden Wechselspannungs-Eingangssignals, die eine beliebige Anzahl von Schaltungsgliedern aufweist.

In einer ersten Schaltungsversion besteht ein einzelnes Schaltungsglied aus zwei hintereinandergeschalteten Kondensatoren und einem Schaltelement, wobei die ersten Anschlüsse der beiden Kondensatoren über das Schaltelement miteinander verbunden sind und das Wechselspannungs-Eingangssignal über zwei Signalleitungen an den zweiten Anschlüssen der beiden Kondensatoren anliegt; zwischen dem mit dem Schaltelement verbundenen Anschluß eines Kondensators des Schaltungsglieds und dem mit der Signalleitung verbundenen Anschluß des jeweils anderen Kondensators steht eine Ausgangsspannung an, deren Amplitude größer als die des Wechselspannungs-Eingangssignals ist.

In einer zweiten Schaltungsversion besteht ein einzelnes Schaltungsglied aus einem Kondensator und drei Schaltelementen, wobei jeweils ein Kondensatoranschluß mit einem Anschluß der beiden ersten synchron schaltenden Schaltelemente verbunden ist und das Wechselspannungs-Eingangssignal über zwei Signalleitungen den anderen Anschlüssen der beiden ersten Schaltelemente zugeführt wird; an einem Anschluß des Kondensators ist ein weiteres Schaltelement angeschlossen.

In einer dritten Schaltungsversion besteht ein einzelnes Schaltungsglied aus drei hintereinandergeschalteten Kondensatoren und drei Schaltelementen, wobei die ersten Anschlüsse der beiden äußeren Kondensatoren über zwei Schaltelemente jeweils mit einem Anschluß des mittleren Kondensators und über das dritte Schaltelement direkt miteinander verbunden sind und das Wechselspannungs-Eingangssignal über zwei Signalleitungen an den zweiten Anschlüssen der beiden äußeren Kondensatoren anliegt; an den beiden Anschlüssen des mittleren Kondensators steht eine Ausgangsspannung an, deren Amplitude größer als die des Wechselspannungs-Eingangssignals ist.

In einer vierten Schaltungsversion besteht ein einzelnes Schaltungsglied aus zwei Kondensatoren und zwei Schaltelementen, wobei der erste Anschluß des ersten Kondensators über die beiden Schaltelemente jeweils mit einem Anschluß des zweiten Kondensators verbunden ist und das Wechselspannungs-Eingangssignal über zwei Signalleitungen an den zweiten Anschlüssen der beiden Kondensatoren anliegt; an den beiden Anschlüssen des zweiten Kondensators steht eine Ausgangsspannung an, deren Amplitude größer als die des Wechselspannungs-Eingangssignals ist.

EP 0 498 350 A2

FIG.3

Für viele Anwendungszwecke ist es erforderlich, aus einer zur Verfügung stehenden Spannung - beispielsweise einer geringen Betriebsspannung oder Eingangssignalspannung - benötigte höhere Spannungswerte zu erzeugen; beispielsweise ist der Löschvorgang eines EE-PROMs nicht mit dem "normalen" TTL-Schaltungspegel von 5 V möglich. Daneben müssen beispielsweise zur Ansteuerung von Leistungsbauelementen oft kurzzeitig hohe Spannungsspitzenwerte bzw. Ansteuerimpulse zur Verfügung gestellt werden, obwohl nur kleine Impulsspannungen vorhanden sind.

Der Erfindung liegt die Aufgabe zugrunde, eine einfache und leicht zu realisierende Schaltung zur Spannungsüberhöhung anzugeben, mit der sich - im Prinzip - beliebige Spannungswerte und hohe Spannungsspitzen erzeugen lassen.

Diese Aufgabe wird erfindungsgemäß durch die Merkmale im Kennzeichen der nebengeordneten Patentansprüche 1 bis 4 gelöst.

Vorteilhafte Weiterbildungen der erfindungsgemäßen Schaltungen ergeben sich aus den weiteren Unteransprüchen.

Die verschiedenen Ausführungsformen bzw. Versionen der erfindungsgemäßen Schaltung weisen folgende Eigenschaften bzw. Vorteile auf:

- Der Schaltungsaufbau ist sehr einfach, da ein Schaltungsglied nur aus wenigen Bauelementen aufgebaut ist: in einer ersten Version der Schaltung aus zwei Kondensatoren und einem Schaltelement, in einer zweiten Version der Schaltung aus einem Kondensator und zwei Schaltelementen, in einer dritten Version aus drei über drei Schaltelemente miteinander verbundenen, hintereinandergeschalteten Kondensatoren und in einer vierten Version aus zwei über zwei Schaltelemente miteinander verbundenen Kondensatoren.

- Durch Verknüpfung einzelner Schaltungsglieder - die in der ersten und zweiten Version über ein weiteres Schaltelement ("Verbindungselement"), in der dritten und vierten Version über Verbindungsleitungen hintereinandergeschaltet werden - läßt sich eine kaskadierte Schaltung realisieren, mit der sich beliebig hohe Maximalwerte der Ausgangsspannung bzw. Spannungsspitzen erzeugen lassen.

- Bei entsprechender Wahl bzw. Ansteuerung der Schaltelemente - oder bei geeigneter Modifikation eines oder mehrerer der Schaltungsglieder durch Einbau oder Entfernen von Schaltungsmitteln (beispielsweise von Kondensatoren) - können auch kontinuierlich abgestufte Spannungswerte gewonnen werden bzw. eine Polaritätsdrehung der Ausgangsspannung gegenüber der Eingangsspannung erreicht werden; diese Spannungen können beim jeweiligen Schaltungsglied stabil abgegriffen werden.

- Die Schaltung hat einen geringen Innenwiderstand: in der ersten und zweiten Version der Schaltung durch die Parallelschaltung der Kondensatoren verschiedener Schaltungsglieder, in der dritten und vierten Version der Schaltung durch die niederohmige Verbindung der einzelnen Schaltungsglieder über die Verbindungsleitungen. Daher können hohe Ströme fließen, hohe Energiewerte erreicht und folglich große Leistungen entnommen werden.

- Die gewünschte Ausgangsspannung steht sehr rasch an; in der zweiten Version werden beim Öffnen der ersten Schaltelemente und Schließen der Verbindungselemente alle Kondensatoren in Serie geschaltet, in der vierten Version sind die ersten Kondensatoren der verschiedenen Schaltungsglieder an eine gemeinsame Signalleitung angeschlossen.

- Die Kondensatoren und die Schaltelemente können beliebig ausgebildet sein: als Schaltelemente sind beispielsweise mechanische, elektrische oder elektronische Schalter möglich; die Kondensatoren können unipolare oder bipolare Kondensatoren mit unterschiedlichen Kapazitätswerten sein.

- Über die Eigenschaften der Kondensatoren lassen sich die Eigenschaften der Schaltungen in gewisser Weise modifizieren: die Kapazitätswerte der Kondensatoren legen den Innenwiderstand und damit die Ausgangsleistung, d. h. die zur Verfügung stehende Energie fest; die Anzahl der Kondensatoren resp. der Schaltungsglieder bestimmt die maximal mögliche Spannung. In der dritten Schaltungsversion werden die Kapazitätswerte der drei Kondensatoren vorteilhafterweise folgendermaßen gewählt: der mittlere Kondensator (beispielsweise ein Elektrolyt-Kondensator) hat einen hohen Wert, so daß kurzfristig eine große Energie zur Verfügung steht; die Kapazitätswerte der beiden äußeren Kondensatoren sind demgegenüber recht klein, so daß auch der Flächenbedarf eingeschränkt wird.

- Die Schaltung läßt sich entweder diskret aus diskreten Bauelementen, integriert in einer integrierten Schaltung - wobei eine Integration aufgrund der Schaltungsanordnung sehr einfach möglich ist - oder mit einer Kombination aus diskreten und integrierten Bauelementen aufbauen.

- Mit der beschriebenen Schaltung können "Grundelemente" zur Spannungsüberhöhung realisiert werden; mehrere derartige Grundelemente - mit einer beliebigen Zahl von Schaltungsgliedern - können je nach Bedarf oder Anwendungsfall auf vielfältige Weise miteinander verknüpft werden. Vorzugsweise werden zwei Grundelemente mit gleicher Anzahl an Schaltungsgliedern spiegelsymmetrisch aneinandergereiht; mit dieser Schaltungsanordnung wird die gewünschte Ausgangsspannung sehr schnell erreicht.

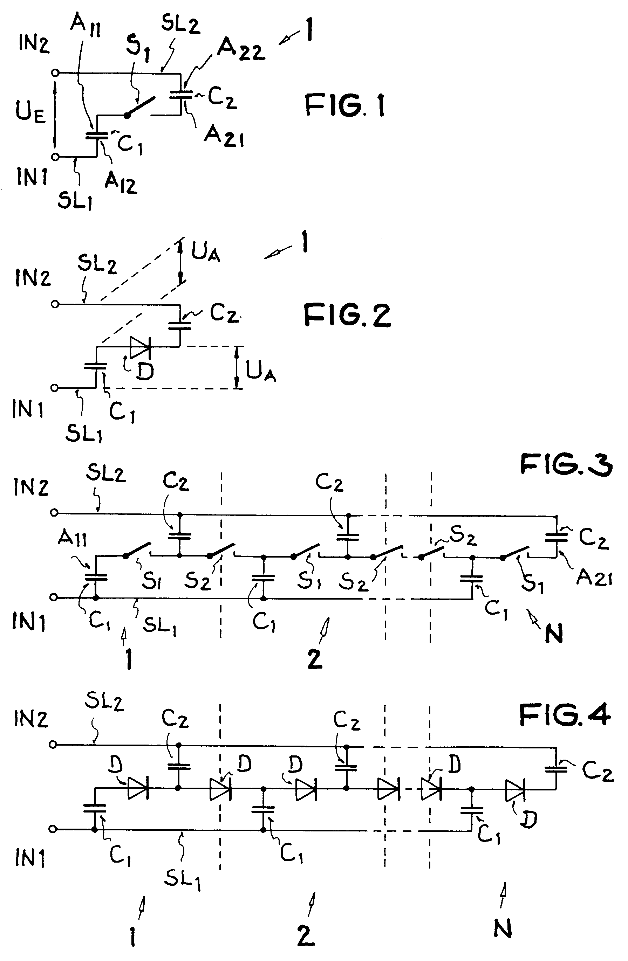

Die verschiedenen Versionen der Schaltung sollen nachstehend anhand der Figuren 1 bis 20 beschrieben werden:

Die Schaltungsanordnung der ersten Version ist in den Figuren 1 bis 4 dargestellt, wobei die Figur 1 ein einzelnes Schaltungsglied, die Figur 2 ein Schaltungsglied mit einer Diode als Schaltelement, die Figur 3 die Kaskadierung mehrerer Schaltungsglieder, und die Figur 4 ein Ausführungsbeispiel der Figur 3 mit Dioden als Schaltelemente zeigt.

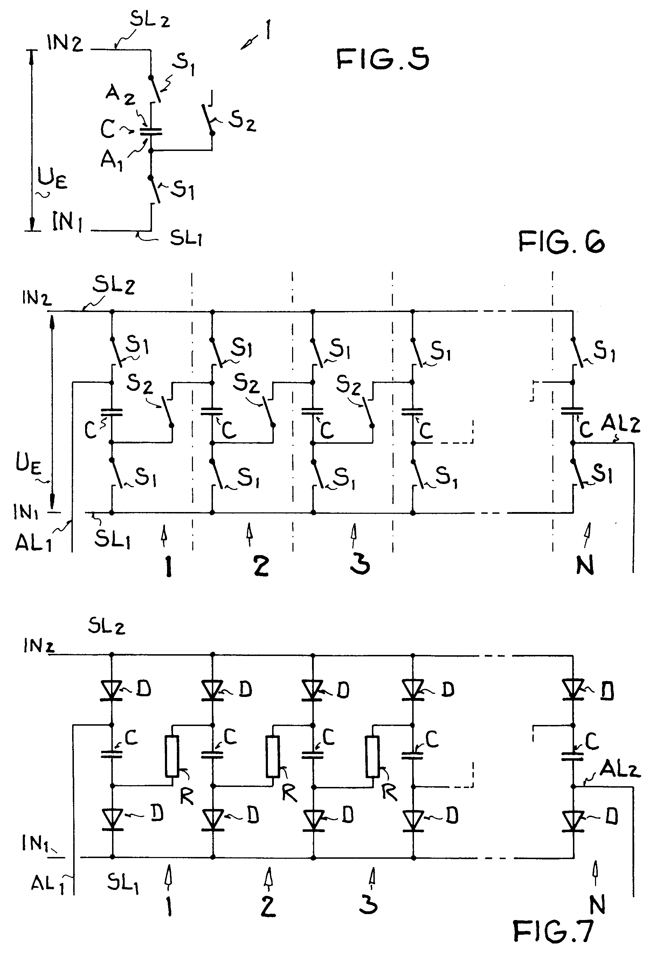

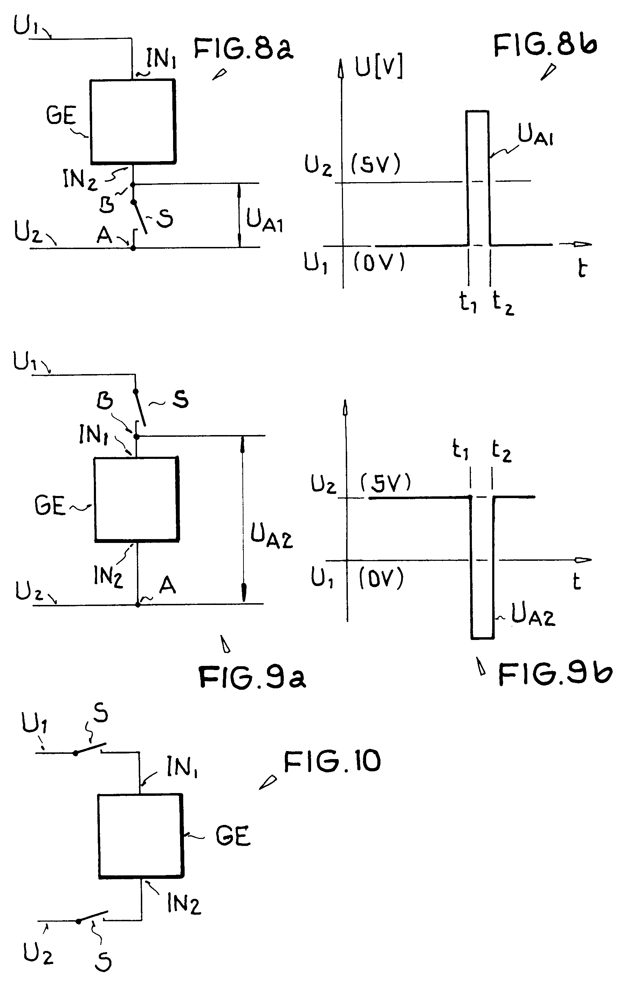

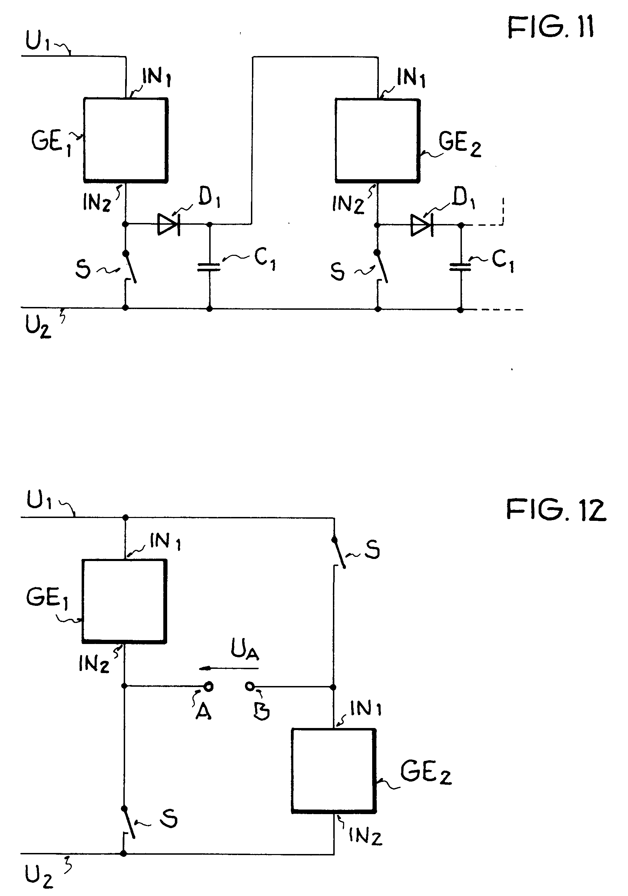

Die Schaltungsanordnung der zweiten Version ist in den Figuren 5 - 12 dargestellt, wobei die Figur 5 ein einzelnes Schaltungsglied, die Figur 6 die Kaskadierung mehrerer Schaltungsglieder zu einem Grundelement und die Figur 7 ein Ausführungsbeispiel der Figur 6 mit Dioden als Schaltelemente zeigt. Weiterhin zeigen die Figuren 8a, 9a und 10 die Beschaltung eines Grundelements, die Figuren 8b und 9b damit erreichbare Spannungsverläufe; in den Figuren 11 und 12 ist an zwei Beispielen die Verknüpfung zweier Grundelemente dargestellt.

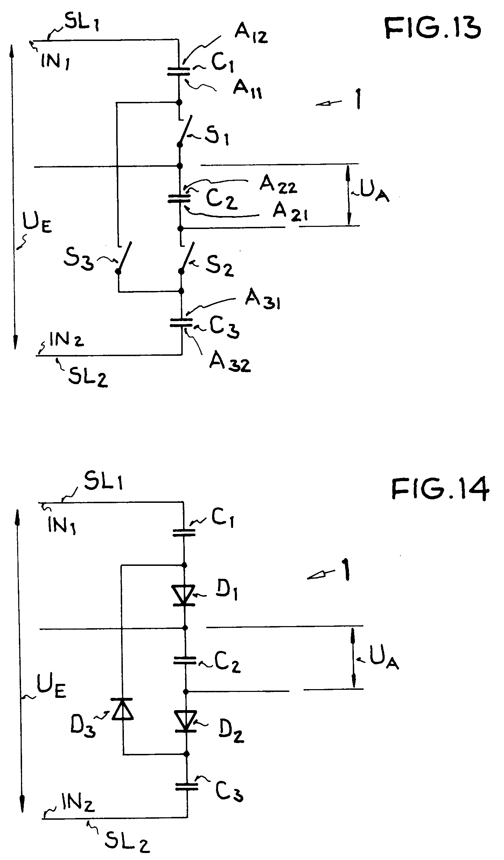

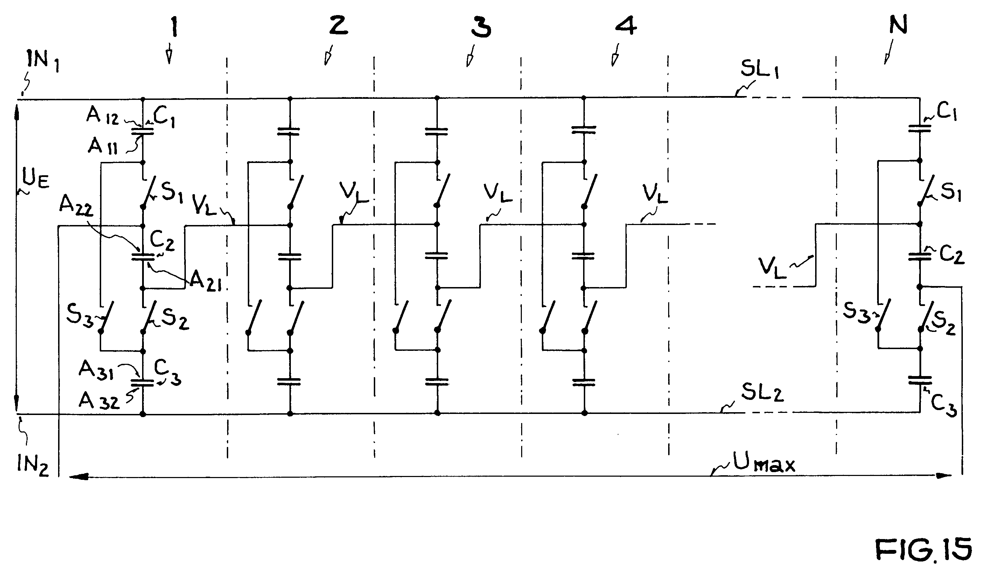

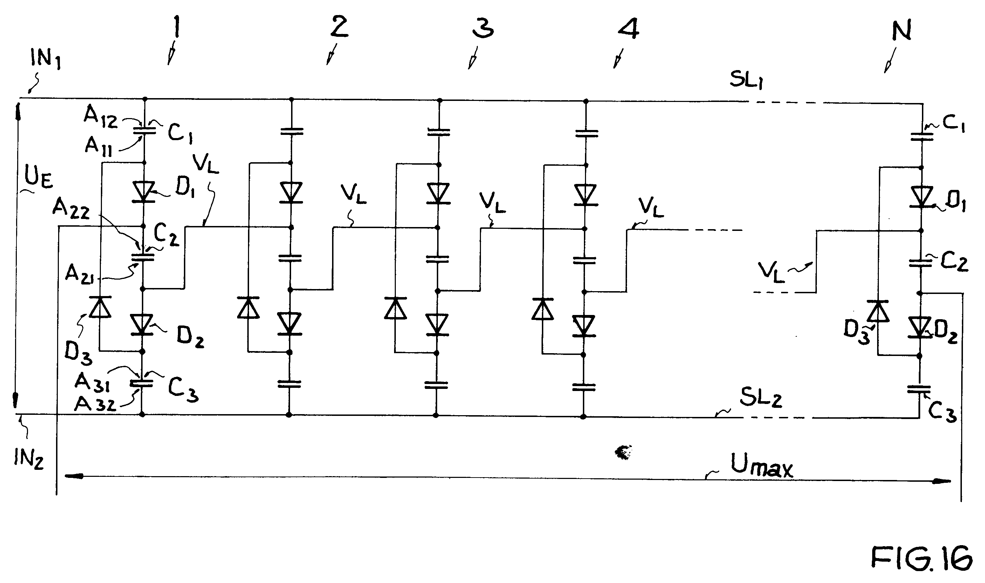

Die Schaltungsanordnung der dritten Version ist in den Figuren 13 bis 16 dargestellt, wobei die Figur 13 ein einzelnes Schaltungsglied, die Figur 14 ein Schaltungsglied mit Dioden als Schaltelemente, die Figur 15 die Kaskadierung mehrerer Schaltungsglieder und die Figur 16 ein Ausführungsbeispiel der Figur 15 mit Dioden als Schaltelemente zeigt.

Die Schaltungsanordnung der vierten Version ist in den Figuren 17 bis 20 dargestellt, wobei die Figur 17 ein einzelnes Schaltungsglied, die Figur 18 ein Schaltungsglied mit Dioden als Schaltelemente, die Figur 19 die Kaskadierung mehrerer Schaltungsglieder und die Figur 20 die Zusammenschaltung zweier Grundelemente zeigt.

a) Schaltungsversion 1:
- - - - - - - - - - - -

Gemäß Figur 1 besteht ein Schaltungsglied 1 aus zwei Kondensatoren $C_1$ und $C_2$, deren erster Anschluß $A_{11}$, $A_{21}$ durch ein Schaltelement $S_1$ und deren zweiter Anschluß $A_{12}$, $A_{22}$ mit einer der beiden Signalleitungen $SL_1$, $SL_2$ verbunden ist, die das an den beiden Eingängen $IN_1$, $IN_2$ anstehende Wechselspannungs-Eingangssignal $U_E$ weiterleiten. Unter der Annahme, daß das Schaltelement $S_1$ synchron zur Phase des Wechselspannungs-Eingangssignals $U_E$ gesteuert wird - dies ist beispielsweise automatisch beim Ausführungsbeispiel der Figur 2 der Fall, wo das Schaltelement $S_1$ durch eine Diode D realisiert ist - werden - bei

"geschlossenem" Schalter $S_1$ - beide Kondensatoren $C_1$, $C_2$ in der ersten Halbwelle der Eingangsspannung $U_E$ auf die halbe Eingangsspannung ($\frac{1}{2} \cdot U_E$) aufgeladen. In der nächsten Halbwelle der Eingangsspannung wird der Schalter $S_1$ "geöffnet" (die Diode der Figur 2 sperrt); am zweiten Kondensator $C_2$ überlagert sich die Eingangsspannung $U_E$ zu der bereits vorhandenen Spannung ($\frac{1}{2} \cdot U_E$), so daß man als maximale Ausgangsspannung $U_A$ das $1\frac{1}{2}$fache der Eingangsspannung ($3/2 \cdot U_E$) erhält, die zwischen dem Anschluß $A_{22}$ und $A_{11}$ bzw. zwischen dem Anschluß $A_{21}$ und $A_{12}$ abgegriffen werden kann. In der Figur 3 ist eine Schaltung aus - über weitere Schaltelemente $S_2$ verbundene - hintereinandergeschalteten Schaltungsgliedern 1 ... N dargestellt; die beiden Signalleitungen $SL_1$, $SL_2$ sind mit jeweils einem Anschluß $A_{12}$ bzw. $A_{22}$ der beiden Kondensatoren jedes Schaltungsglieds 1 ... N verbunden. Die Spannungsüberhöhung ergibt sich dadurch, daß jeweils die ersten oder die zweiten Kondensatoren der Schaltungsglieder in einer Phase des Wechselspannungs-Eingangssignals $U_E$ durch die Kondensatoren vorhergehender Schaltungsglieder in Serie mit der Eingangsspannung auf immer höhere Spannungswerte aufgeladen werden, wobei in jeder Phase der Eingangsspannung die Kondensatoren aller Schaltungsglieder nachgeladen werden. Durch jedes Schaltungsglied wird die Spannung um den Wert der Eingangsspannung erhöht; daher beträgt die maximale Ausgangsspannung $U_{max}$ - diese steht zwischen dem Anschluß $A_{11}$ des ersten Kondensators $C_1$ des ersten Schaltungsglieds 1 und dem Anschluß $A_{21}$ des zweiten Kondensators $C_2$ des letzten Schaltungsglieds N an - bei N-Schaltungsgliedern $U_{max} = (N + \frac{1}{2}) \cdot U_E$. Um eine etwas höhere Spannung zu erreichen, kann der erste Kondensator $C_1$ des ersten Schaltungsglieds 1 entfallen. Falls eine geringere Spannung als die maximale Ausgangsspannung $U_{max}$ benötigt wird, können beliebige Vielfache der Eingangsspannung an der entsprechenden Stelle der Schaltung abgegriffen werden, wobei einer oder mehrere Kondensatoren der Schaltungsglieder aus Stabilitätsgründen - um Sperrstrom-Einflüsse zu vermeiden und zur Sicherstellung einer Belastungsunabhängigkeit - kurzgeschlossen werden. Beliebige kontinuierliche Spannungswerte lassen sich erzeugen, wenn an einer (oder mehreren) geeigneten Stelle(n) einer oder mehrere der Kondensatoren durch andere Bauelemente, Netzwerke dieser Bauelemente oder durch Signalquellen ersetzt werden. Die Schaltelemente $S_1$ und $S_2$ sind über Verbindungsleitungen mit einem oder mehreren externen Taktgeneratoren verbunden.

In der Figur 4 ist ein Ausführungsbeispiel dargestellt, bei dem die Schaltelemente $S_1$ und $S_2$ durch Dioden D realisiert sind, so daß alle Schaltelemente synchron zur Phase der Eingangsspannung $U_E$

schalten und das Wechselspannungs-Eingangssignal nur jeweils in einer Halbwelle durchlassen. Bei dieser Schaltungsvariante können - ohne Ersetzung bzw. Kurzschließen einzelner Kondensatoren - stabile Spannungswerte zwischen den Anschlüssen der Dioden verschiedener Schaltungsglieder abgegriffen werden.

Werden die Schaltelemente $S_1$ bzw. $S_2$ nicht durch Dioden realisiert, kann mit Hilfe von Steuersignalen auf den Verbindungsleitungen, die zur Ansteuerung der Schaltelemente $S_1$ bzw. $S_2$ (EIN-AUS-Steuerung) dienen, die Ausgangsspannung beeinflußt werden; je nach Relation bzw. Phasenlage des Steuersignals bezüglich der Eingangsspannung kann die Polarität und der Wert der Ausgangsspannung verändert werden.

b) Schaltungsversion 2:

Gemäß Figur 5 besteht ein Schaltungsglied 1 aus dem Kondensator C, dessen erster Anschluß $A_1$ durch ein Schaltelement $S_1$ mit der Signalleitung $SL_1$ und dessen zweiter Anschluß $A_2$ durch ein Schaltelement $S_1$ mit der Signalleitung $SL_2$ verbunden ist; die beiden Signalleitungen $SL_1$ und $SL_2$ leiten das an den beiden Eingängen $IN_1$, $IN_2$ anstehende Wechselspannungs-Eingangssignal $U_E$ - beispielsweise eine sich zeitlich ändernde Gleichspannung - weiter. Am ersten Anschluß $A_1$ des Kondensators C ist ein weiteres Schaltelement $S_2$ - das Verbindungselement - angeschlossen. Die Schaltelemente $S_1$ können über Verbindungsleitungen mit externen Taktgeneratoren verbunden werden, die das Öffnen und Schließen der Schaltelemente $S_1$ und des Schaltelements $S_2$ synchronisieren. Die beiden Schaltelemente $S_1$ werden synchron angesteuert; bei "geschlossenem" Schaltelement $S_1$ wird der Kondensator C durch die Eingangsspannung $U_E$ auf deren Spannungswert ($U_E$) aufgeladen.

In der Figur 6 ist eine Schaltung aus - über die weiteren Schaltelemente $S_2$ verbundene - hintereinandergeschalteten Schaltungsgliedern 1 ... N dargestellt; die beiden Signalleitungen $SL_1$, $SL_2$ sind mit jeweils einem Anschluß der ersten Schaltelemente $S_1$ jedes Schaltungsglieds 1 ... N verbunden, so daß alle Kondensatoren C verschiedener Schaltungsglieder bei geschlossenen Schaltelementen $S_1$ parallelgeschaltet sind. Die Spannungsüberhöhung ergibt sich dadurch, daß die Kondensatoren C aller Schaltungsglieder 1 ... N bei geschlossenen Schaltelementen $S_1$ und geöffneten Verbindungselementen $S_2$ durch das Wechselspannungs-Eingangssignals $U_E$ auf die Eingangsspannung aufgeladen werden. Wird das Verbindungselement $S_2$ nicht durch einen zu öffnenden Schalter, sondern durch passive Halbleiter-Bauelemente realisiert, wird am Schaltungsglied $S_2$

die Verlustleistung erzeugt. Beim Öffnen der Schaltelemente $S_1$ (synchron), werden die Schaltelemente $S_2$ gleichzeitig geschlossen und demzufolge alle Kondensatoren in Serie geschaltet. Durch jedes Schaltungsglied wird die Spannung um den Betrag der Eingangsspannung $U_E$ erhöht; die maximale Ausgangsspannung $U_{max}$ - diese steht zwischen einem Anschluß $A_1$ bzw. $A_2$ des Kondensators C des ersten Schaltungsglieds 1 und dem anderen Anschluß $A_2$ bzw. $A_1$ des Kondensators C des letzten Schaltungsglieds N an - beträgt bei N-Schaltungsgliedern $U_{max} = (N - 1) \cdot U_E$. Der Kapazitätswert der Kondensatoren bestimmt die mögliche gespeicherte Energie. Falls eine geringere Ausgangsspannung $U_A$ als die maximale Ausgangsspannung $U_{max}$ benötigt wird, können beliebige Vielfache der Eingangsspannung an der entsprechenden Stelle der Schaltung (beim jeweiligen Schaltungsglied) abgegriffen werden. Beliebige kontinuierliche Spannungswerte $U_A$ lassen sich erzeugen, wenn an einer (oder mehreren) geeigneten Stelle(n) Schaltungsmittel eingefügt, entfernt oder durch andere Bauelemente, Netzwerke dieser Bauelemente oder durch Signalquellen ersetzt werden. Beispielsweise können Zenerdioden zur Spannungsbegrenzung, Transistoren zur gemeinsamen Stromversorgung oder Emitterfolgerschaltungen zur kontinuierlichen Abstufung der Spannungswerte eingefügt werden.

Die Schaltelemente $S_1$ und $S_2$ können beliebig ausgebildet sein; beispielsweise können die Verbindungselemente $S_2$ durch passive Bauelemente (Widerstände) oder aktive Bauelemente (Transistoren) realisiert werden. Bei einer Verwendung von Transistoren können diese niederohmig geschaltet werden, wodurch die Verlustleistung reduziert wird. In der Figur 7 ist ein Ausführungsbeispiel dargestellt, bei dem die Schaltelemente $S_1$ und $S_2$ durch Dioden D und Widerstände R realisiert sind, so daß alle Schaltelemente synchron zur Phase der Eingangsspannung $U_E$ schalten und das Wechselspannungs-Eingangssignal nur jeweils in einer Halbwelle durchlassen; eine externe Taktansteuerung ist bei dieser Ausführungsform nicht nötig. Werden die Schaltelemente $S_1$ bzw. $S_2$ nicht durch Dioden realisiert, kann mit Hilfe der Schaltphase des Steuersignals zur Ansteuerung der Schaltelemente (EIN-AUS-Steuerung), die Ausgangsspannung beeinflußt werden; je nach Relation bzw. Phasenlage des Steuersignals bezüglich der Eingangsspannung kann die Polarität und der Wert der Ausgangsspannung verändert werden.

Die Figuren 8a und 9a zeigen die Ansteuerung eines aus N-Schaltungsgliedern gebildeten Grundelements GE, wobei dem Eingang $IN_1$ die Spannung $U_1$ und dem Eingang $IN_2$ die Spannung $U_2$ zugeführt wird; vor dem Eingang $IN_2$ (Figur 8a) bzw. dem Eingang $IN_1$ (Figur 9a) ist ein Schaltelement S anordnet. Zwischen den Punkten A und B kann beim Öffnen des Schalters S eine - abhängig von der Ausgestaltung des Grundelements GE - erhöhte Ausgangsspannung abgegriffen werden; die Ausgangsspannung $U_{A1}$ gemäß Figur 8a ist in Phase mit der Eingangsspannung, bei der Schaltung gemäß Figur 9a steht eine erhöhte Ausgangsspannung $U_{A2}$ an, deren Polarität gegenüber der Eingangsspannung invertiert ist.

Die Figuren 8b und 9b veranschaulichen diesen Sachverhalt; dort wurde beispielsweise als Spannung $U_1$ der Wert 5 V und als Spannung $U_2$ der Wert 0 V gewählt. Bei geschlossenem Schalter S sind die Ausgangsspannungen $U_{A1}$ resp. $U_{A2}$ 0 V resp. 5 V (so groß wie $U_2$ bzw. $U_1$), beim Öffnen des Schalters S (Zeitpunkt $t_1$) ergibt sich gemäß Figur 8b eine positive ($U_{A1}$) bzw. gemäß Figur 9b eine negative ($U_{A2}$) Spannungsspitze so lange, wie der Schalter S geöffnet bleibt (Zeitpunkt $t_2$). Derartige Spannungsspitzen können beispielsweise zur Ansteuerung von Triacs ($U_{A1}$) oder zur Impulswandlung ($U_{A2}$) dienen. Gemäß dem Schaltungsbeispiel der Figur 10 werden beide Eingangsspannungen $U_1$ und $U_2$ über Schalter S den beiden Eingängen $IN_1$ und $IN_2$ des Grundelements GE zugeführt. Die entsprechenden Ausgangsspannungen können dann isoliert gegenüber der Ansteuerung abgegriffen werden.

Die beschriebenen Grundelemente lassen sich auf vielerlei Art miteinander verknüpfen; in den Figuren 11 und 12 sind dazu exemplarisch zwei Möglichkeiten dargestellt, mit denen eine Spannungsmultiplikation erreicht werden kann:

- Gemäß der Figur 11 werden die beiden Grundelemente $GE_1$ und $GE_2$, die beide beispielsweise jeweils eine fünffache Spannungserhöhung bewirken, miteinander verbunden, wobei sie durch die Diode $D_1$ und den Kondensator $C_1$ entkoppelt werden. Am Schaltungsausgang kann als Ausgangsspannung $U_A$ das 25fache der Eingangsspannung abgegriffen werden; die Spannungsmultiplikation kann mit oder ohne Entkopplung durchgeführt werden.

- Die Ausgangsspannungen müssen nicht unbedingt gegenüber der Versorgungsspannung abgegriffen werden. So entspricht beispielsweise in der Figur 12 die Ausgangsspannung $U_A$ zwischen den Punkten A und B - bei gleichen Grundelementen $GE_1$ und $GE_2$ mit jeweils 5facher Spannungsverstärkung - dem 10-fachen Wert der Eingangsspannung.

## c) Schaltungsversion 3:

Gemäß Figur 13 besteht ein Schaltungsglied 1 aus drei hintereinandergeschalteten Kondensatoren $C_1$, $C_2$ und $C_3$. Die ersten Anschlüsse $A_{11}$, $A_{31}$ der

beiden äußeren Kondensatoren $C_1$, $C_3$ sind durch Schaltelemente $S_1$, $S_2$ einerseits mit jeweils einem Anschluß $A_{21}$ bzw. $A_{22}$ des mittleren Kondensators $C_2$ und andererseits direkt miteinander über das dritte Schaltelement $S_3$ verbunden. Der zweite Anschluß $A_{12}$, $A_{32}$ der beiden äußeren Kondensatoren $C_1$, $C_3$ ist jeweils mit einer der beiden Signalleitungen $SL_1$, $SL_2$ verbunden, die das an den beiden Eingängen $IN_1$, $IN_2$ anstehende Wechselspannungs-Eingangssignal $U_E$ weiterleiten. Die Schaltelemente $S_1$, $S_2$ und $S_3$ können über Taktleitungen mit externen Taktgeneratoren verbunden werden, die das Öffnen und Schließen der Schaltelemente $S_1$, $S_2$ und $S_3$ synchronisieren. Die beiden Schaltelemente $S_1$ und $S_2$ werden synchron angesteuert, wobei bei "geschlossenen" Schaltelementen $S_1$ und $S_2$ das Schaltelement $S_3$ geöffnet wird und umgekehrt beim Schließen des Schaltelements $S_3$ die beiden Schaltelemente $S_1$ und $S_2$ geöffnet werden. Unter der Annahme, daß die Schaltelemente $S_1$, $S_2$ und $S_3$ mit der Phase des Wechselspannungs-Eingangssignals $U_E$ geschaltet werden - dies ist beispielsweise automatisch beim Ausführungsbeispiel der Figur 14 der Fall, wo die Schaltelemente $S_1$, $S_2$ und $S_3$ durch Dioden $D_1$, $D_2$ und $D_3$ realisiert sind - werden - bei "geschlossenen" Schaltelementen $S_1$ und $S_2$ und geöffnetem Schaltelement $S_3$ - die beiden Kondensatoren $C_1$ und $C_3$ in der ersten Halbwelle der Eingangsspannung $U_E$ aufgeladen; die Eingangsspannung $U_E$ wird dabei je nach Verhältnis der Kapazitätswerte der beiden Kondensatoren $C_1$ und $C_3$ auf diese Kondensatoren aufgeteilt. In der zweiten Halbwelle der Eingangsspannung $U_E$ werden die Schaltelemente $S_1$ und $S_2$ "geöffnet" (die Dioden $D_1$, $D_2$ der Figur 14 sperren) und das Schaltelement $S_2$ wird geschlossen (die Diode $D_3$ der Figur 14 ist leitend); an den beiden äußeren Kondensatoren $C_1$ und $C_3$ überlagert sich die Eingangsspannung $U_E$ zu der bereits auf diesen Kondensatoren $C_1$, $C_3$ vorhandenen Spannung $U_E$, so daß der mittlere Kondensator $C_2$ mit der doppelten Eingangsspannung $2 \cdot U_E$ aufgeladen wird. Die Aufladung des mittleren Kondensators $C_2$ erfolgt demnach sukzessive und stufenweise durch die beiden äußeren Kondensatoren $C_1$ und $C_3$; die Aufladegeschwindigkeit und damit die Zeit, nach der der Maximalwert der Spannung bzw. die gesamte Energie zur Verfügung steht, hängt einerseits vom Verhältnis der Kapazitätswerte der Kondensatoren $C_1$, $C_3$ zu $C_2$ und andererseits von der Frequenz des Wechselspannungs-Eingangssignals $U_E$ ab. Als Ausgangsspannung $U_A$, die nach vollständiger Aufladung des Kondensators $C_2$ an den beiden Anschlüssen $A_{21}$ und $A_{22}$ des mittleren Kondensators $C_2$ abgegriffen werden kann, erhält man den doppelten Wert ($2 \cdot U_E$) der Eingangsspannung.

In der Figur 15 ist eine Schaltung aus - über Verbindungsleitungen VL - hintereinandergeschalteten Schaltungsgliedern 1 ... N dargestellt; die Verbindungsleitungen VL verbinden jeweils den ersten Anschluß $A_{21}$ des mittleren Kondensators $C_2$ eines Schaltungsglieds mit dem zweiten Anschluß $A_{22}$ des mittleren Kondensators $C_2$ des nachfolgenden Schaltungsglieds, so daß die mittleren Kondensatoren $C_2$ aller Schaltungsglieder 1 ... N hintereinandergeschaltet sind. Die beiden Signalleitungen $SL_1$, $SL_2$ sind jeweils mit dem zweiten Anschluß $A_{12}$ bzw. $A_{32}$ der äußeren Kondensatoren $C_1$ bzw. $C_3$ jedes Schaltungsglieds 1 ... N verbunden, so daß die in einem Schaltungsglied hintereinandergeschalteten Kondensatoren $C_1$, $C_2$, $C_3$ verschiedener Schaltungsglieder zueinander parallelgeschaltet sind. Die äußeren Kondensatoren $C_1$ und $C_3$ aller Schaltungsglieder 1 ... N werden bei geschlossenen Schaltelementen $S_1$ und $S_2$ und geöffneten Schaltelementen $S_3$ durch das Wechselspannungs-Eingangssignal $U_E$ aufgeladen; beim Öffnen der Schaltelemente $S_1$ und $S_2$ (synchron) werden die Schaltelemente $S_3$ gleichzeitig geschlossen und demzufolge alle - in Serie geschalteten - mittleren Kondensatoren $C_2$ aufgeladen. Durch jedes der Schaltungsglieder wird - wie anhand der Figur 13 beschrieben - die Spannung um den doppelten Betrag ($2 \cdot U_E$) der Eingangsspannung $U_E$ erhöht; die maximale Ausgangsspannung $U_{max}$ - diese steht zwischen einem Anschluß $A_{21}$ bzw. $A_{22}$ des mittleren Kondensators $C_2$ des ersten Schaltungsglieds 1 und dem anderen Anschluß $A_{22}$ bzw. $A_{21}$ des mittleren Kondensators $C_2$ des letzten Schaltungsglieds N an - beträgt bei N-Schaltungsgliedern somit $U_{max} = 2N \cdot U_E$. Der Kapazitätswert der Kondensatoren bestimmt die mögliche speicherbare Energie, wobei der Kapazitätswert von $C_2$ zur kurzzeitigen Bereitstellung großer Energiewerte groß sein kann - beispielsweise 10 μF -, und für die Kondensatoren $C_1$ und $C_3$ beliebige Kapazitätswerte gewählt werden können - beispielsweise 10 pF. Falls eine geringere Ausgangsspannung $U_A$ als die maximale Ausgangsspannung $U_{max}$ benötigt wird, können beliebige Vielfache der doppelten Eingangsspannung ($2 \cdot U_E$) an der entsprechenden Stelle der Schaltung (beim jeweiligen Schaltungsglied) abgegriffen werden. Beliebige kontinuierliche Spannungswerte $U_A$ lassen sich erzeugen, wenn an einer (oder mehreren) geeigneten Stelle(n) Schaltungsmittel eingefügt, entfernt oder durch andere Bauelemente, Netzwerke dieser Bauelemente oder durch Signalquellen ersetzt werden; insbesondere können einer oder mehrere der Kondensatoren eines oder mehrerer der Schaltungsglieder ersetzt oder entfernt werden. Beispielsweise können Zenerdioden zur Spannungsbegrenzung, Transistoren zur gemeinsamen Stromversorgung oder Emitterfolgerschaltungen zur kontinuierlichen Abstufung der Spannungswerte eingefügt werden.

Die Schaltelemente $S_1$, $S_2$ und $S_3$ können beliebig ausgebildet sein und sind über Taktleitungen mit einem oder mehreren externen Taktgeneratoren verbunden. Mit Hilfe der Schaltphase des Steuersignals zur Ansteuerung der Schaltelemente (EIN-AUS-Steuerung) kann die Ausgangsspannung beeinflußt werden; je nach Relation bzw. Phasenlage des Steuersignals zur Phase der Eingangsspannung kann die Polarität und der Wert der Ausgangsspannung verändert werden. Werden die Schaltelemente $S_1$, $S_2$ und $S_3$ allerdings durch Dioden realisiert - wie im Ausführungsbeispiel der Figur 16 dargestellt - schalten sie bereits synchron zur Phase der Eingangsspannung $U_E$; eine externe Taktansteuerung der Schaltelemente ist bei dieser Ausführungsform nicht nötig.

d) Schaltungsversion 4:

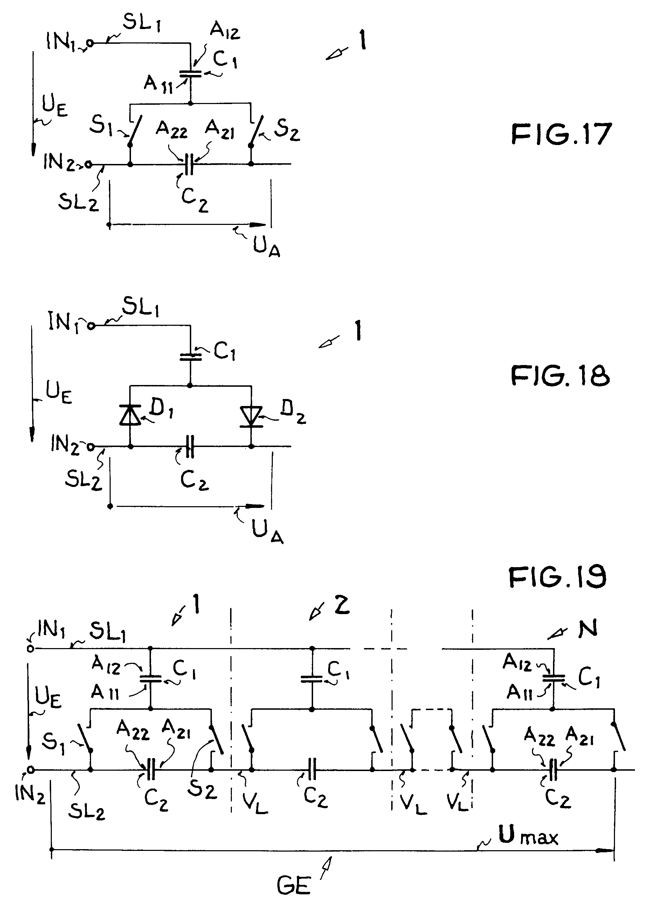

Gemäß Figur 17 besteht ein Schaltungsglied 1 aus zwei Kondensatoren $C_1$ und $C_2$. Der erste Anschluß $A_{11}$ des ersten Kondensators $C_1$ ist durch die beiden Schaltelemente $S_1$ und $S_2$ mit jeweils einem Anschluß $A_{21}$ bzw. $A_{22}$ des zweiten Kondensators $C_2$ verbunden. Der zweite Anschluß $A_{12}$, $A_{22}$ der beiden Kondensatoren $C_1$, $C_2$ ist jeweils mit einer der beiden Signalleitungen $SL_1$, $SL_2$ verbunden, die das an den beiden Eingängen $IN_1$, $IN_2$ anstehende Wechselspannungs-Eingangssignal $U_E$ weiterleiten. Die Schaltelemente $S_1$ und $S_2$ können über Taktleitungen mit externen Taktgeneratoren verbunden werden, die das Öffnen und Schließen der Schaltelemente $S_1$ und $S_2$ synchronisieren. Die beiden Schaltelemente $S_1$ und $S_2$ werden invers angesteuert, wobei bei "geschlossenem" Schaltelement $S_1$ das Schaltelement $S_2$ geöffnet ist und umgekehrt beim Schließen des Schaltelements $S_2$ das Schaltelement $S_1$ geöffnet wird. Dabei müssen die beiden Schalter $S_1$ bzw. $S_2$ nicht während der gesamten Halbwelle des Wechselspannungs-Eingangsignals $U_E$ geöffnet bzw. geschlossen bleiben. Unter der Annahme, daß die Schaltelemente $S_1$ und $S_2$ mit der Phase des Wechselspannungs-Eingangsignals $U_E$ geschaltet werden - dies ist beispielsweise automatisch beim Ausführungsbeispiel der Figur 18 der Fall, wo die Schaltelemente $S_1$ und $S_2$ durch Dioden $D_1$ und $D_2$ realisiert sind - wird - bei "geschlossenem" Schaltelement $S_1$ und geöffnetem Schaltelement $S_2$ - der Kondensator $C_1$ in der ersten Halbwelle der Eingangsspannung $U_E$ auf den Spannungswert $U_E$ aufgeladen. In der zweiten Halbwelle der Eingangsspannung $U_E$ wird das Schaltelemente $S_1$ "geöffnet" (die Diode $D_1$ der Figur 18 sperrt) und das Schaltelement $S_2$ wird geschlossen (die Diode $D_2$ der Figur 18 ist leitend); am Kondensator $C_2$ überlagert sich die Eingangsspannung $U_E$ zu der bereits auf diesem Kondensator vorhandenen Spannung $U_E$, so daß der zweite Kondensator $C_2$ auf die doppelte Eingangsspannung $2 \cdot U_E$ aufgeladen wird. Als Ausgangsspannung $U_A$, die an den beiden Anschlüssen $A_{21}$ und $A_{22}$ des zweiten Kondensators $C_2$ abgegriffen werden kann, erhält man demnach den doppelten Wert $(2 \cdot U_E)$ der Eingangsspannung $U_E$. Die Aufladegeschwindigkeit und damit die Zeit, nach der der Maximalwert der Spannung bzw. die gesamte Energie zur Verfügung steht, hängt einerseits vom Verhältnis der Kapazitätswerte der Kondensatoren $C_1$ zu $C_2$ und andererseits von der Frequenz des Wechselspannungs-Eingangssignals $U_E$ ab.

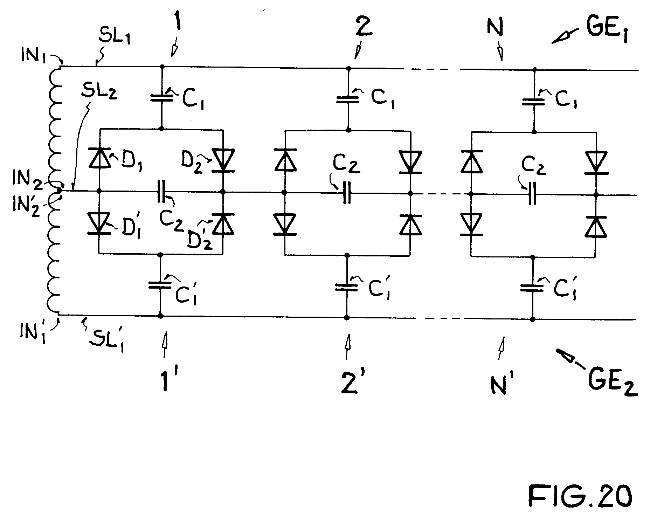

In der Figur 19 ist eine kaskadierte Schaltung aus hintereinandergeschalteten Schaltungsgliedern 1 ... N dargestellt; die Verbindungsleitungen VL verbinden jeweils den ersten Anschluß $A_{21}$ des zweiten Kondensators $C_2$ eines Schaltungsglieds mit dem zweiten Anschluß $A_{22}$ des zweiten Kondensators $C_2$ des nachfolgenden Schaltungsglieds, so daß die Kondensatoren $C_2$ aller Schaltungsglieder 1 ... N hintereinandergeschaltet sind. Die Signalleitung $SL_1$ ist mit dem zweiten Anschluß $A_{12}$ der ersten Kondensatoren $C_1$ jedes Schaltungsglieds 1 ... N verbunden, so daß die ersten Kondensatoren $C_1$ verschiedener Schaltungsglieder alle an einer gemeinsamen Leitung miteinander verbunden sind. Die Kondensatoren $C_1$ aller Schaltungsglieder 1 ... N werden bei geschlossenen Schaltelementen $S_1$ und geöffneten Schaltelementen $S_2$ durch das Wechselspannungs-Eingangssignal $U_E$ aufgeladen; beim Öffnen der Schaltelemente $S_1$ werden die Schaltelemente $S_2$ gleichzeitig geschlossen und alle - in Serie geschalteten - zweiten Kondensatoren $C_2$ aufgeladen. Durch jedes der Schaltungsglieder wird - wie anhand der Figur 17 beschrieben - die Spannung um den doppelten Betrag $(2 \cdot U_E)$ der Eingangsspannung $U_E$ erhöht; die maximale Ausgangsspannung $U_{max}$ - diese steht zwischen dem zweiten Anschluß $A_{22}$ des zweiten Kondensators $C_2$ des ersten Schaltungsglieds 1 und dem ersten Anschluß $A_{21}$ des zweiten Kondensators $C_2$ des letzten Schaltungsglieds N an - beträgt bei N-Schaltungsgliedern somit $U_{max} = 2N \cdot U_E$. Der Kapazitätswert der Kondensatoren $C_1$ und $C_2$ bestimmt die mögliche speicherbare Energie, wobei der Kapazitätswert von $C_2$ diejenige Zeit vorgibt, nach der die gesamte Energie zur Verfügung steht. Falls eine geringere Ausgangsspannung $U_A$ als die maximale Ausgangsspannung $U_{max}$ benötigt wird, können beliebige Vielfache der doppelten Eingangsspannung $(2 \cdot U_E)$ an der entsprechenden Stelle der Schaltung (beim jeweiligen Schaltungsglied) abgegriffen werden. Die Schaltelemente $S_1$ und $S_2$ können beliebig ausgebildet sein und sind über Taktleitungen mit einem externen Taktgenerator oder mehreren externen Taktgeneratoren verbunden. Durch die geeignete Wahl der Schaltphase des Steuersignals zur Ansteuerung der Schaltelemente (EIN-AUS-Steuerung) kann die Ausgangsspannung beeinflußt werden; je nach Relation bzw. Phasenlage des Steuersignals zur Phase der Eingangsspannung kann die Polarität und der Wert der Ausgangsspannung verändert werden. Werden die Schaltelemente $S_1$ und $S_2$ allerdings durch Dioden realisiert, schalten sie bereits synchron zur Phase der Eingangs-Wechselspannung $U_E$; eine externe Taktansteuerung der Schaltelemente ist bei dieser Ausführungsform nicht nötig.

Die aus der kaskadierten Schaltung gewonnenen "Grundelemente" GE mit einer beliebigen Zahl von Schaltungsgliedern können auf vielfältige Weise miteinander verbunden werden. Die Figur 20 zeigt beispielsweise die spiegelsymmetrische Verknüpfung zweier Grundelemente $GE_1$ und $GE_2$ mit jeweils der gleichen Zahl von N bzw. N' Schaltungsgliedern und den Schaltungseingängen $IN_1$, $IN_2$ bzw. $IN_1'$, $IN_2'$. Die beiden Grundelemente $GE_1$, $GE_2$ sind dabei derart aneinandergeschaltet, daß die zweiten Schaltungseingänge $IN_2$, $IN_2'$ und die zweiten Kondensatoren $C_2$ aller Schaltungsglieder beiden Grundelemente $GE_1$, $GE_2$ gemeinsam sind und die ersten Kondensatoren $C_1$ bzw. $C_1'$ mit einem Anschluß über die Signalleitungen $SL_1$ bzw. $SL_1'$ mit den Schaltungseingängen $IN_1$ bzw. $IN_1'$ verbunden sind. Die Signalleitung $SL_2$ kann mit dem zweiten Kondensator $C_2$ des ersten Schaltungsglieds 1 verbunden werden oder aber alternativ ganz entfallen. Die Ausgangsspannung steht bei dieser Schaltungsanordnung sehr schnell zur Verfügung.

Die Ausgangsspannung kann optional auch auf die Schaltungseingänge zurückgeführt werden, so daß Spannungsregelschleifen entstehen; damit ist eine Spannungsregelung zur Konstanthaltung der Spannung über die Regelung der Impulsbreite bzw. Impulsfrequenz der Schaltimpulse möglich, so daß Spannungen beliebiger Werte geregelt werden können.

Einsetzen läßt sich die erfindungsgemäße Schaltung überall dort, wo höhere Spannungen als die zur Verfügung stehenden Spannungswerte benötigt werden. Als exemplarische Anwendungsbeispiele seien die Löschspannungserzeugung für EE-PROMs (ca. 12 V bei einem TTL-Pegel von 5 V), die Ansteuerung von Lumineszenz-Displays (ca. 70 V), die Bereitstellung der benötigten Spannung bei Schnittstellen-ICs (± 12 V), die Erzeugung von Abstimmspannungen für Kapazitätsdioden, die Erzeugung von beliebig hohen Ansteuerimpulsen für Leistungsbauelemente aus kleinen Impulsspannungen (auch mit Polaritätswechsel), und die Erzeugung von Gasentladungs-Spannungen oder die Ansteuerung von Glimmlampen genannt. Daneben können einzelne Schaltungsversionen auch für die Erzeugung beliebig hoher Ansteuerimpulse für Leistungsbauelemente aus kleinen Impulsspannungen (auch mit Polaritätswechsel) und für die getaktete Spannungsverstärkung sowohl negativer als auch positiver Spannungen eingesetzt werden.

Denkbar ist auch die Verwendung einzelner Schaltungsversionen zur getakteten Ladungsverschiebung, wobei mittels einer Ladungsverschiebekette aus einzelnen Schaltungsgliedern an den Schaltungseingängen anstehende Ladungen stufenweise verschoben werden.

## Patentansprüche

1. Schaltung zur Spannungsüberhöhung eines Wechselspannungs-Eingangssignals, das an zwei Schaltungseingängen ($IN_1$, $IN_2$) ansteht, dadurch gekennzeichnet, daß die Schaltung eine beliebige Anzahl von Schaltungsgliedern aufweist, daß ein Schaltungsglied (1) aus zwei hintereinandergeschalteten Kondensatoren ($C_1$, $C_2$) und einem Schaltelement ($S_1$) besteht, wobei die ersten Anschlüsse ($A_{11}$, $A_{21}$) der beiden Kondensatoren ($C_1$, $C_2$) über das Schaltelement ($S_1$) miteinander verbunden sind und das Wechselspannungs-Eingangssignal ($U_E$) über zwei Signalleitungen ($SL_1$, $SL_2$) an den zweiten Anschlüssen ($A_{12}$, $A_{22}$) der beiden Kondensatoren ($C_1$, $C_2$) anliegt, und daß zwischen dem mit dem Schaltelement ($S_1$) verbundenen Anschluß ($A_{11}$, $A_{21}$) eines Kondensators ($C_1$, $C_2$) des Schaltungsglieds (1) und dem mit der Signalleitung ($SL_2$, $SL_1$) verbundenen Anschluß ($A_{22}$ bzw. $A_{12}$) des jeweils anderen Kondensators ($C_2$, $C_1$) eine Ausgangsspannung ($U_A$) ansteht, deren Amplitude größer als die des Wechselspannungs-Eingangssignals ($U_E$) ist.

2. Schaltung zur Spannungsüberhöhung eines Wechselspannungs-Eingangssignals, das an zwei Schaltungseingängen ($IN_1$, $IN_2$) ansteht, dadurch gekennzeichnet, daß die Schaltung eine beliebige Anzahl von Schaltungsgliedern aufweist, daß ein einzelnes Schaltungsglied (1) aus einem Kondensator (C) und drei Schaltelementen ($S_1$, $S_2$) besteht, wobei jeweils ein Kondensatoranschluß ($A_1$, $A_2$) mit einem Anschluß der beiden ersten synchron schaltenden Schaltelemente ($S_1$) verbunden ist, daß das Wechselspannungs-Eingangssignal ($U_E$) über zwei Signalleitungen ($SL_1$, $SL_2$) den anderen Anschlüssen der beiden ersten Schaltelemente ($S_1$) zugeführt wird, und daß an einem Anschluß ($A_1$ bzw. $A_2$) des Kondensators (C) ein weiteres Schaltelement ($S_2$) angeschlossen ist.

3. Schaltung zur Spannungsüberhöhung eines Wechselspannungs-Eingangssignals ($U_E$), das

an zwei Schaltungseingängen ($IN_1$, $IN_2$) ansteht, dadurch gekennzeichnet, daß die Schaltung eine beliebige Anzahl von Schaltungsgliedern aufweist, daß ein einzelnes Schaltungsglied (1) aus drei hintereinandergeschalteten Kondensatoren ($C_1$, $C_2$, $C_3$) und drei Schaltelementen ($S_1$, $S_2$, $S_3$) besteht, wobei die ersten Anschlüsse ($A_{11}$, $A_{31}$) der beiden äußeren Kondensatoren ($C_1$, $C_3$) über zwei Schaltelemente ($S_1$, $S_2$) jeweils mit einem Anschluß ($A_{21}$ bzw. $A_{22}$) des mittleren Kondensators ($C_2$) und über das dritte Schaltelement ($S_3$) direkt miteinander verbunden sind, daß das Wechselspannungs-Eingangssignal ($U_E$) über zwei Signalleitungen ($SL_1$, $SL_2$) an den zweiten Anschlüssen ($A_{12}$, $A_{32}$) der beiden äußeren Kondensatoren ($C_1$, $C_3$) anliegt, und daß an den beiden Anschlüssen ($A_{21}$ bzw. $A_{22}$) des mittleren Kondensators ($C_2$) eine Ausgangsspannung ($U_A$) ansteht, deren Amplitude größer als die des Wechselspannungs-Eingangssignals ($U_E$) ist.

4. Schaltung zur Spannungsüberhöhung eines Wechselspannungs-Eingangssignals ($U_E$), das an zwei Schaltungseingängen ($IN_1$, $IN_2$) ansteht, dadurch gekennzeichnet, daß die Schaltung eine beliebige Anzahl von Schaltungsgliedern aufweist, daß ein einzelnes Schaltungsglied (1) aus zwei Kondensatoren ($C_1$, $C_2$) und zwei Schaltelementen ($S_1$, $S_2$) besteht, wobei der erste Anschluß ($A_{11}$) des ersten Kondensators ($C_1$) über die beiden Schaltelemente ($S_1$, $S_2$) jeweils mit einem Anschluß ($A_{21}$ bzw. $A_{22}$) des zweiten Kondensators ($C_2$) verbunden ist, daß das Wechselspannungs-Eingangssignal ($U_E$) über zwei Signalleitungen ($SL_1$, $SL_2$) an den zweiten Anschlüssen ($A_{12}$, $A_{22}$) der beiden Kondensatoren ($C_1$, $C_2$) anliegt, und daß an den beiden Anschlüssen ($A_{21}$ bzw. $A_{22}$) des zweiten Kondensators ($C_2$) eine Ausgangsspannung ($U_A$) ansteht, deren Amplitude größer als die des Wechselspannungs-Eingangssignals ($U_E$) ist.

5. Schaltung nach Anspruch 1, dadurch gekennzeichnet, daß die einzelnen Schaltungsglieder (1, 2 ... N) über weitere Schaltelemente ($S_2$) hintereinandergeschaltet sind, wobei die weiteren Schaltelemente ($S_2$) den ersten Anschluß ($A_{21}$) des zweiten Kondensators ($C_2$) eines Schaltungsglieds mit dem ersten Anschluß ($A_{11}$) des ersten Kondensators ($C_1$) des nachfolgenden Schaltungsglieds verbinden, und daß die zweiten Anschlüsse ($A_{12}$ bzw. $A_{22}$) der Kondensatoren ($C_1$, $C_2$) aller Schaltungsglieder (1 ... N) jeweils über die beiden Signalleitungen ($SL_1$ bzw. $SL_2$) miteinander verbunden

sind.

6. Schaltung nach Anspruch 5, dadurch gekennzeichnet, daß jedes Schaltungsglied die maximale Ausgangsspannung ($U_{max}$) um den Spannungswert des Eingangssignals ($U_E$) erhöht, und daß die maximale Ausgangsspannung ($U_{max}$) zwischen den nicht mit der Signalleitung verbundenen Anschlüssen ($A_{11}$, $A_{21}$) des ersten Kondensators ($C_1$) des ersten Schaltungsglieds (1) und des zweiten Kondensators ($C_2$) des letzten Schaltungsglieds (N) ansteht.

7. Schaltung nach Anspruch 2, dadurch gekennzeichnet, daß die einzelnen Schaltungsglieder (1, 2 ... N) über die weiteren Schaltelemente ($S_2$) hintereinandergeschaltet sind, wobei die weiteren Schaltelemente ($S_2$) einen Anschluß ($A_1$ bzw. $A_2$) des Kondensators (C) eines Schaltungsglieds mit dem anderen Anschluß ($A_2$ bzw. $A_1$) des Kondensators (C) eines nachfolgenden Schaltungsglieds verbinden, und daß die zweiten Anschlüsse der ersten Schaltelemente ($S_1$) aller Schaltungsglieder (1 ... N) jeweils über die beiden von den Eingängen ($IN_1$, $IN_2$) herführenden Signalleitungen ($SL_1$ bzw. $SL_2$) miteinander verbunden sind.

8. Schaltung nach Anspruch 7, dadurch gekennzeichnet, daß jedes Schaltungsglied die maximal mögliche Ausgangsspannung ($U_{max}$) um den Spannungswert des Eingangssignals ($U_E$) erhöht, und daß die maximal mögliche Ausgangsspannung ($U_{max}$) zwischen einem Anschluß ($A_1$ bzw. $A_2$) des Kondensators (C) des ersten Schaltungsglieds (1) und dem anderen Anschluß ($A_2$ bzw. $A_1$) des Kondensators (C) des letzten Schaltungsglieds (N) ansteht.

9. Schaltung nach Anspruch 3, dadurch gekennzeichnet, daß die einzelnen Schaltungsglieder (1, 2 ... N) über Verbindungsleitungen (VL) hintereinandergeschaltet sind, wobei die Verbindungsleitungen (VL) den ersten Anschluß ($A_{21}$) des mittleren Kondensators ($C_2$) eines Schaltungsglieds mit dem zweiten Anschluß ($A_{22}$) des mittleren Kondensators ($C_2$) des nachfolgenden Schaltungsglieds verbinden, und daß die zweiten Anschlüsse ($A_{12}$ bzw. $A_{32}$) der beiden äußeren Kondensatoren ($C_1$, $C_3$) aller Schaltungsglieder (1 ... N) jeweils über die beiden von den Eingängen ($IN_1$, $IN_2$) herführenden Signalleitungen ($SL_1$ bzw. $SL_2$) miteinander verbunden sind.

10. Schaltung nach Anspruch 9, dadurch gekennzeichnet, daß jedes Schaltungsglied die maximale Ausgangsspannung ($U_{max}$) um den doppelten Spannungswert ($2 \cdot U_E$) des Eingangssignals ($U_E$) erhöht, und daß die maximale Ausgangsspannung ($U_{max}$) zwischen dem zweiten Anschluß ($A_{22}$) des mittleren Kondensators ($C_2$) des ersten Schaltungsglieds (1) und dem ersten Anschluß ($A_{21}$) des mittleren Kondensators ($C_2$) des letzten Schaltungsglieds (N) ansteht.

11. Schaltung nach Anspruch 4, dadurch gekennzeichnet, daß die einzelnen Schaltungsglieder (1, 2 ... N) hintereinandergeschaltet sind, wobei Verbindungsleitungen (VL) den ersten Anschluß ($A_{21}$) des zweiten Kondensators ($C_2$) eines Schaltungsglieds mit dem zweiten Anschluß ($A_{22}$) des zweiten Kondensators ($C_2$) des nachfolgenden Schaltungsglieds verbinden, und die zweiten Anschlüsse ($A_{12}$) der ersten Kondensatoren ($C_1$) aller Schaltungsglieder (1 ... N) über die vom ersten Schaltungseingang ($IN_1$) herführende Signalleitung ($SL_1$) miteinander verbunden sind.

12. Schaltung nach Anspruch 11, dadurch gekennzeichnet, daß jedes Schaltungsglied (1, 2 ... N) die maximale Ausgangsspannung ($U_{max}$) um den doppelten Spannungswert ($2 \cdot U_E$) des Wechselspannungs-Eingangssignals ($U_E$) erhöht, und daß die maximale Ausgangsspannung ($U_{max}$) zwischen dem zweiten Anschluß ($A_{22}$) des zweiten Kondensators ($C_2$) des ersten Schaltungsglieds (1) und dem ersten Anschluß ($A_{21}$) des zweiten Kondensators ($C_2$) des letzten Schaltungsglieds (N) ansteht.

13. Schaltung nach einem der Ansprüche 5 bis 12, dadurch gekennzeichnet, daß eines oder mehrere der Schaltungsglieder (1, 2 ... N) durch Einfügen zusätzlicher Schaltungsmittel oder Signalquellen oder durch Entfernen bestehender Schaltungsmittel modifiziert werden, so daß beliebige kontinuierliche Werte der Ausgangsspannung ($U_A$) an verschiedenen Punkten der Schaltung stabil abgegriffen werden können.

14. Schaltung nach einem der Ansprüche 5 bis 13, dadurch gekennzeichnet, daß einer oder mehrere der Kondensatoren ($C_1$, $C_2$, $C_3$) der Schaltungsglieder (1, 2 ... N) durch Schaltungsmittel oder Signalquellen ersetzt werden, so daß beliebige kontinuierliche Werte der Ausgangsspannung ($U_A$) an verschiedenen Punkten der Schaltung stabil abgegriffen werden können.

15. Schaltung nach Anspruch 13 oder 14, dadurch gekennzeichnet, daß als Schaltungsmittel aktive, passive Bauelemente oder Kombinationen dieser Bauelemente vorgesehen sind.

**16.** Schaltung nach Anspruch 13 oder 14, dadurch gekennzeichnet, daß als Signalquellen Wechselspannungsquellen, Gleichspannungsquellen oder Kombinationen dieser Spannungsquellen vorgesehen sind.

**17.** Schaltung nach einem der Ansprüche 1 bis 16, dadurch gekennzeichnet, daß Steuerleitungen zu den Schaltelementen ($S_1$, $S_2$, $S_3$) der Schaltungsglieder (1, 2 ...N) vorgesehen sind, über die die Schaltelemente ($S_1$, $S_2$, $S_3$) durch Schaltsignale gesteuert werden.

**18.** Schaltung nach Anspruch 17, dadurch gekennzeichnet, daß der Wert und die Polarität der Ausgangsspannung ($U_A$) in Abhängigkeit der Phasenlage der Schaltsignale bezüglich der Phase des Wechselspannungs-Eingangssignals ($U_E$) veränderbar sind.

**19.** Schaltung nach einem der Ansprüche 2, 7, 8, 17 und 18, dadurch gekennzeichnet, daß die Schaltelemente ($S_1$, $S_2$) durch die Schaltsignale derart gesteuert werden, daß die ersten Schaltelemente ($S_1$) synchron beim Aufladen der Kondensatoren (C) geschlossen sind und anschließend geöffnet werden, und daß die weiteren Schaltelemente ($S_2$) beim Aufladen der Kondensatoren (C) geöffnet sind und beim Öffnen der ersten Schaltelemente ($S_1$) geschlossen werden.

**20.** Schaltung nach einem der Ansprüche 3, 9, 10, 17 und 18, dadurch gekennzeichnet, daß die Schaltelemente ($S_1$, $S_2$, $S_3$) durch die Schaltsignale derart gesteuert werden, daß die ersten beiden Schaltelemente ($S_1$, $S_2$) in der ersten Halbwelle des Wechselspannungs-Eingangssignals ($U_E$) zum Aufladen des mittleren Kondensators ($C_2$) geschlossen sind und das dritte Schaltelement ($S_3$) geöffnet ist, und daß in der zweiten Halbwelle des Wechselspannungs-Eingangssignals ($U_E$) zum Umladen der beiden äußeren Kondensatoren ($C_1$, $C_3$) die beiden ersten Schaltelemente ($S_1$, $S_2$) geöffnet sind und das dritte Schaltelement ($S_3$) geschlossen ist.

**21.** Schaltung nach einem der Ansprüche 4, 11, 12, 17 und 18, dadurch gekennzeichnet, daß die Schaltelemente ($S_1$, $S_2$) durch die Schaltsignale derart gesteuert werden, daß während einer bestimmten Zeitdauer in der ersten Halbwelle des Wechselspannungs-Eingangssignals ($U_E$) beim Aufladen des ersten Kondensators ($C_1$) das erste Schaltelement ($S_1$) geschlossen und das zweite Schaltelement ($S_2$) geöffnet ist, und daß während einer bestimmten Zeitdauer in der zweiten Halbwelle des Wechselspannungs-Eingangssignals ($U_E$) beim Aufladen des zweiten Kondensators ($C_2$) das erste Schaltelement ($S_1$) geöffnet und das zweite Schaltelement ($S_2$) geschlossen ist.

**22.** Schaltung nach einem der Ansprüche 1 bis 16, dadurch gekennzeichnet, daß die Schaltelemente ($S_1$, $S_2$, $S_3$) durch Dioden realisiert sind, die in Abhängigkeit der Polarität des Wechselspannungs-Eingangssignals ($U_E$) schalten.

**23.** Schaltung nach einem der Ansprüche 1 bis 21, dadurch gekennzeichnet, daß die Schaltelemente ($S_1$, $S_2$, $S_3$) elektronische Schalter sind.

**24.** Schaltung nach Anspruch 23, dadurch gekennzeichnet, daß die Schaltelemente ($S_1$, $S_2$, $S_3$) Transistoren sind.

**25.** Schaltung nach einem der Ansprüche 1 bis 21, dadurch gekennzeichnet, daß die Schaltelemente ($S_1$, $S_2$, $S_3$) mechanische Schalter sind.

**26.** Schaltung nach einem der Ansprüche 2, 7, 8, 13 - 19 und 22 - 25, dadurch gekennzeichnet, daß die weiteren Schaltelemente ($S_2$) passive oder aktive Bauelemente sind.

**27.** Schaltung nach einem der Ansprüche 1 bis 26, dadurch gekennzeichnet, daß der Ausgang eines oder mehrerer der Schaltungsglieder mit den Schaltungseingängen ($IN_1$, $IN_2$) bzw. mit dem Eingang eines vorhergehenden Schaltungsglieds zu einer Rückkoppelschleife verbunden ist, und daß durch diese Rückkoppelschleife der Wert der abgegriffenen Ausgangsspannung stabilisiert wird.

**28.** Schaltung nach einem der Ansprüche 1 bis 27, dadurch gekennzeichnet, daß sie aus diskreten Bauelementen aufgebaut ist.

**29.** Schaltung nach einem der Ansprüche 1 bis 28, dadurch gekennzeichnet, daß sie als integrierte Schaltung aufgebaut ist.

**30.** Schaltung nach einem der Ansprüche 1 bis 29, dadurch gekennzeichnet, daß Grundelemente (GE) zur Spannungsüberhöhung mit einer beliebigen Zahl von Schaltungsgliedern gebildet werden, und daß zwei oder mehrere der Grundelemente (GE) miteinander verknüpft werden.

**31.** Schaltung nach Anspruch 30, dadurch gekennzeichnet, daß zwei Grundelemente ($GE_1$, $GE_2$)

mit gleicher Anzahl von Schaltungsgliedern (N, N') spiegelbildlich aneinandergefügt werden.

32. Schaltung nach Anspruch 2, 7, 8, 13 - 19 und 22 - 31, dadurch gekennzeichnet, daß die zweiten Kondensatoren ($C_2$) der Schaltungsglieder für beide Grundelemente ($GE_1$, $GE_2$) gemeinsam sind, und daß ein Anschluß der ersten Kondensatoren ($C_1$, $C_1'$) aller Schaltungsglieder (N, N') über erste Signalleitungen ($SL_1$, $SL_1'$) mit den ersten Schaltungseingängen ($IN_1$, $IN_2$) verbunden ist.

33. Schaltung nach Anspruch 32, dadurch gekennzeichnet, daß die zweite Signalleitung ($SL_2$) mit dem zweiten Anschluß ($A_{22}$) des zweiten Kondensators ($C_2$) des ersten Schaltungsglieds (1) verbunden ist.

34. Schaltung nach Anspruch 32, dadurch gekennzeichnet, daß der zweite Anschluß ($A_{22}$) des zweiten Kondensators ($C_2$) des ersten Schaltungsglieds (1) lediglich mit den beiden ersten Schaltern ($S_1$) der ersten Schaltungsglieder (1) beider Grundelemente ($GE_1$, $GE_2$) verbunden ist.

FIG.1

FIG.2

FIG.3

FIG.4

FIG.5

FIG.6

FIG.7

FIG.8a

FIG.8b

FIG.9a

FIG.9b

FIG.10

FIG. 11

FIG. 12

16

FIG.13

FIG.14

17

FIG.15

FIG.16

FIG.17

FIG.18

FIG.19

FIG.20